(19) Europäisches Patentamt

European Patent Office

Office européen des brevets

(11) Numéro de publication : **0 402 191 B1**

(12) **FASCICULE DE BREVET EUROPEEN**

(45) Date de publication du fascicule du brevet :
**07.01.93 Bulletin 93/01**

(51) Int. Cl.⁵ : **G01B 11/02,** G01B 11/04

(21) Numéro de dépôt : **90401392.7**

(22) Date de dépôt : **23.05.90**

(54) **Procédé et dispositif de mesure de largeur de traits à balayage optique.**

(30) Priorité : **24.05.89 FR 8906805**

(43) Date de publication de la demande :
**12.12.90 Bulletin 90/50**

(45) Mention de la délivrance du brevet :
**07.01.93 Bulletin 93/01**

(84) Etats contractants désignés :
**DE GB IT**

(56) Documents cités :
**EP-A- 0 195 405**
**DE-A- 2 554 086**
**US-A- 4 112 309**

(56) Documents cités :
**PHILIPS TECHNICAL REVIEW, vol. 43, no. 7,
July 1987, pages 184-191, Eindhoven, NL; G.
PRAST: "Quantitative measurement by theS-
chlieren method"**

(73) Titulaire : **NANO-MASTER**
**P.A. de St. Guénault 7, rue Jean Mermoz**
**F-91005 Evry Cedex (FR)**

(72) Inventeur : **Hignette, Olivier Marcel**
**6, Rue Paul Eluard**
**F-91000 St. Germain Les Corbeil (FR)**

(74) Mandataire : **Fort, Jacques**
**CABINET PLASSERAUD 84, rue d'Amsterdam**
**F-75009 Paris (FR)**

## Description

L'invention concerne de façon générale la métrologie optique et plus particulièrement la mesure de largeur de traits étroits se présentant en relief ou en creux sur un support ; elle trouve une application particulièrement importante dans la mesure de la largeur de traits obtenus par photogravure lors de la fabrication des circuits intégrés, et permet alors un contrôle dimensionnel de ces circuits.

Dans ce domaine particulier, il existe un besoin de contrôler les largeurs de traits obtenus par photolithographie à l'aide d'une résine photosensible. On a déjà utilisé des procédés optiques, travaillant en lumière visible. Mais on se heurte à un problème : beaucoup de matériaux en couche mince sont transparents dans le visible. C'est notamment le cas des résines photosensibles utilisées dans la fabrication des circuits intégrés. La transparence se traduit par des phénomènes optiques de résonance, de canalisation d'ondes, d'interférences et de diffraction qu'on ne sait corriger correctement que pour des épaisseurs faibles, ne dépassant pas 0,5 μm environ. Cette limitation est d'autant plus gênante qu'on utilise couramment à l'heure actuelle des couches de résine dont l'épaisseur dépasse 1 μm.

Au surplus, les procédés existants ont pour la plupart une répétabilité et une linéarité insuffisantes.

La présente invention vise notamment à fournir un procédé et un dispositif répondant mieux que ceux antérieurement connus aux exigences de la pratique, notamment en écartant les problèmes liés à la transparence de beaucoup de matériaux en couches minces et en garantissant la répétabilité et la linéarité de la réponse, quelles que soient les variations de la réflectivité du support de traits.

Dans ce but, l'invention propose notamment un procédé de mesure optique de largeur de trait en relief ou en creux sur un support , suivant lequel on balaie la surface du support orthogonalement au trait à l'aide d'un système optique confocal à source d'éclairement monomode transverse, on mesure les variations du signal de sortie d'un détecteur différentiel associé à un couteau conjugué du foyer du système optique sur le support et orienté orthogonalement au trait, et on en déduit le profil à la base des flancs du trait dans une zone de linéarité de la mesure.

On sait qu'un montage optique confocal comporte, un point lumineux source et un détecteur, en général sensiblement ponctuel, dont l'image est focalisée au même emplacement sur le support à observer.

L'invention propose également un dispositif de mesure de largeur de trait en relief ou en creux sur un support, utilisable notamment pour contrôler la largeur de traits sur les circuits intégrés en cours de fabrication, comprenant un montage optique confocal, à source de lumière monomode fournissant un front d'onde plan, un déflecteur optique de balayage transversal, un séparateur des faisceaux incident dirigé vers le support du trait et réfléchi par ce support, et un détecteur constitué par un couteau placé à l'emplacement conjugué du foyer du montage optique (donc des plans image et objet) et transversalement au trait dont la largeur est à mesurer et par un capteur différentiel placé à l'emplacement conjugué de la pupille et fournissant un signal fonction de la différence d'éclairement de part et d'autre du couteau.

Dans un premier mode de réalisation de l'invention, on détermine simplement la largeur du trait à sa base par détection de la distance entre les points de balayage où l'écart du signal par rapport à une valeur de référence (qui peut être nulle si la base se trouve au milieu de la plage de linéarité) atteint un seuil déterminé. Dans un autre mode de réalisation, on commande la focalisation en asservissant la distance du montage optique au support, autour du point d'équilibre du capteur différentiel, de façon à suivre l'ensemble du profil.

L'invention sera mieux comprise à la lecture de la description qui suit d'un mode particulier de réalisation, donné à titre d'exemple non limitatif. La description se réfère au dessin qui l'accompagne, dans lequel :

- la Figure 1 est un schéma de principe montrant une constitution possible d'un dispositif suivant l'invention ;
- la Figure 2 montre une section d'un trait dont la largeur est à mesurer ;
- la Figure 3 est un schéma montrant la loi de variation de l'écart normalisé entre éclairements des deux secteurs du détecteur dans un dispositif du genre montré en Figure 1, en fonction de la distance entre objectif et support de trait ;
- la Figure 4 montre la variation du signal lors du passage des flancs d'un trait au cours du balayage du support ;
- la Figure 5 montre une variante de réalisation du détecteur de la Figure 4 ;
- la Figure 6 montre un montage de l'objectif suivant une variante du dispositif de la Figure 1, permettant de réaliser une profilométrie.

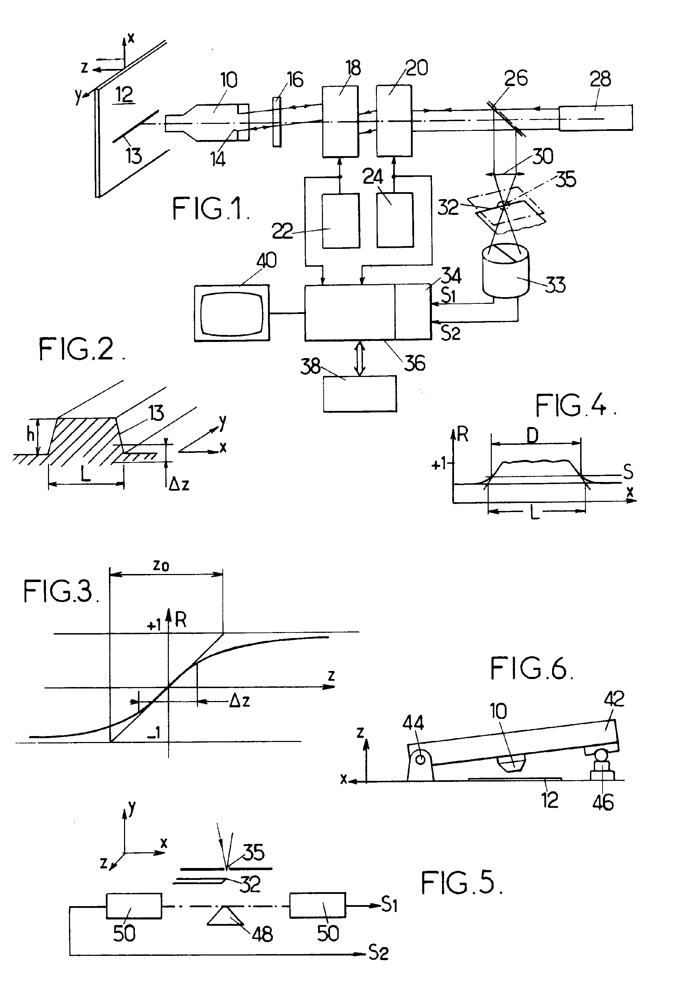

On supposera que le dispositif de mesure dont la constitution de principe est montrée en figure 1 est destiné à la mesure de largeur de traits orientés suivant une direction y sur des circuits intégrés en cours de fabrication. Il est alors souhaitable d'utiliser une lumière pour laquelle les résines photosensibles habituelles sont opaques. La plupart de ces résines ont une absorption forte au-dessous de 0,35 μm ce qui permet d'utiliser comme source de lumière un laser hélium-cadmium dont la seconde raie se situe à 0,325 μm ou une source à spectre large (lampe à arc) filtrée au-dessus de 320 nm.

Le dispositif de la Figure 1 comporte un objectif 10 destiné à être placé à proximité immédiate du support 12 des traits à contrôler, qui se présentent fréquemment avec une largeur à la base comprise entre 0,3 et 0,8 µm et une hauteur légèrement supérieure à 1 µm. Cet objectif sert à concentrer sur le support la lumière provenant d'une source monomode sous forme d'une tache dont la dimension peut être réduite à 0,3 µm environ sans difficultés, et à restituer la lumière réfléchie. Il est placé de façon que son foyer soit au niveau de la base du trait 13 dont la largeur L à la base est à mesurer (fig. 2). Le faisceau de lumière qui provient du point du support 12 placé face à l'objectif 10 et qui se trouve dans le plan objet de l'objectif (plan de focalisation) traverse la pupille 14 de l'objectif et arrive sur un isolateur optique 16, constitué généralement par un polariseur et une lame quart d'onde, ou par des verres utilisant l'effet Faraday, destiné à réduire la transmission de la lumière rétrodiffusée.

Le faisceau de lumière traverse ensuite deux déflecteurs 18 et 20, respectivement destinés à assurer le balayage selon deux directions orthogonales x et y du support. On utilisera généralement des déflecteurs galvanométriques, car la limitation de vitesse de balayage qu'ils entraînent n'est pas gênante pour la quasi-totalité des applications considérées et, au surplus, il n'existe pas de déflecteurs acousto-optiques disponibles à l'heure actuelle dans le domaine ultraviolet. Ces déflecteurs sont commandés par des générateurs de rampe respectifs 22 et 24, qu'on peut considérer comme des générateurs de balayage de ligne et d'image, respectivement.

La lumière sortant du déflecteur 20 est renvoyée par un séparateur 26 (miroir semi-transparent par exemple) vers un système dioptrique d'agrandissement 30 qui illumine un détecteur 33.

Dans un montage confocal classique, un sténopé de dimension inférieure à celle de la tache de diffraction, constituant filtre spatial, est placée entre le système dioptrique 30 et le détecteur 33, au point conjugué du plan focal de l'objectif.

L'énergie lumineuse d'illumination du plan objet est fournie par une source fournissant un front d'onde plan, qui sera un laser ou une lampe à arc 28 filtrée spectralement et spatialement ; cette source fournit un faisceau de lumière parallèle qui traverse le miroir semi-transparent 26, les déflecteurs 20 et 18, le séparateur 16 et l'objectif 10.

Le dispositif suivant l'invention montré en Figure 1 comporte, dans un plan conjugué de la pupille 14, un couteau 32 dont l'arête est orientée transversalement au trait dont la largeur est à mesurer et se trouve dans l'axe optique du système dioptrique 30 et du détecteur 33. Le détecteur 33 est constitué alors par un photodétecteur à deux secteurs, fournissant deux signaux S1 et S2, constitué par exemple par une photodiode silicium à deux secteurs. On constitue ainsi un système de détection par la méthode de Foucault. Un diaphragme percé d'un trou 35 ayant un diamètre de l'ordre de 10 fois la tache de diffraction est avantageusement placé contre le couteau, le trou étant centré sur l'image de retour du faisceau laser (en traits mixtes sur la Figure 1). On obtient ainsi une très bonne réjection de la lumière rétrodiffusée dans l'optique sans changer le signal recueilli par le détecteur 33 sur une profondeur de champ d'environ 2 µm.

Les signaux S1 et S2 sont appliqués à des convertisseurs analogique/numérique 34 d'échantillonnage synchronisés par les générateurs de rampe numériques 22 et 24. Ces convertisseurs fournissent des mots de 8 bits par exemple, représentant chacun un pixel, à une unité de mémoire 36 reliée à un calculateur 38 de traitement du signal. Ce calculateur est prévu pour fournir une sortie de la forme :

$$R = (S1 - S2)/(S1 + S2)$$

pour chaque pixel.

L'expérience montre que, lorsque l'objectif 10 est focalisé sur le support, c'est-à-dire sur le plan à la base du trait, la variation de R en fonction de la hauteur z présente l'allure illustrée en Figure 3. La variation comporte une zone quasi linéaire de largeur $\Delta z$, correspondant à une portion d'une loi de variation telle que R passe de -1 à +1 pour une largeur z0 sensiblement égale à $1,2 \, \lambda/\alpha^2$ ($\lambda$ étant la longueur d'onde de la lumière et $\alpha$ l'ouverture numérique).

Lorsqu'on balaie le support 12 suivant l'axe x, le signal de sortie fourni par le calculateur de traitement 38 est en conséquence représenté par une courbe de variation du genre montré en Figure 4, dans la mesure où l'objectif 10 est focalisé sur la base du support 12 et où la moitié supérieure de la zone de linéarité (Figure 3) correspond à la partie basse uniquement du trait.

Cette courbe peut être visualisée sur un moniteur 40. La hauteur h du trait (Figure 2) étant supérieure à la zone de linéarité, seules sont significatives les zones du signal correspondant aux flancs du trait à proximité de la base, là où le signal n'est pas saturé.

Pour déterminer la largeur L, on peut comparer le signal à un seuil S. La largeur L sera égale à la distance D entre les deux passages successifs au seuil S, augmenté d'une valeur de calibration constante. Le résultat obtenu est indépendant de la réflectivité du matériau constituant le support et le trait du fait de la normalisation obtenue en divisant le signal d'erreur S1-S2 par S1+S2.

A titre d'exemple, on peut indiquer que la zone de linéarité $\Delta Z/2$ est de l'ordre de 0,2 µm pour une ouverture numérique $\alpha = 0,95$ et une longueur d'onde de 0,325 µm. Une telle zone de linéarité permet d'obtenir des résultats satisfaisants pour des traits ayant une hauteur dépassant le micron.

Au lieu d'une diode en silicium, qui donne des résultats satisfaisants dans le visible, on peut utiliser d'autres détecteurs, tels qu'un photomultiplicateur à deux secteurs, lorsqu'on travaille dans l'ultra-violet et que le niveau d'énergie requis par la diode se traduirait par une insolation inadmissible de la résine photo-sensible.

Dans la variante de réalisation montrée en Figure 5, l'ensemble couteau-détecteur est constitué par le couteau 32 un prisme rectangle 48 à dièdre chanfreiné et deux capteurs 50, constitués par exemple par des photomultiplicateurs. On pourrait constituer le couteau par l'arête vive du prisme 48, à faces traitées pour les rendre réfléchissantes, mais cette dernière solution présente des difficultés de réalisation. Le prisme sera généralement monté de façon ajustable suivant la direction x uniquement tandis que le couteau 32 solidaire du diaphragme 35 est avantageusement ajustable dans les directions x, y et z.

Le procédé de mise en oeuvre du dispositif de la Figure 1 découle directement de la constitution matérielle et il n'est donc pas nécessaire de le décrire.

Lorsque l'on veut non seulement mesurer la largeur d'un trait à la base, mais encore obtenir le profil du trait, voire même le profil de traits successifs, la zone de linéarité disponible n'est pas suffisante. Mais on peut dans ce cas asservir la position de l'objectif pour qu'il suive le niveau de la surface du support.

Dans le mode de réalisation de la Figure 6, l'objectif 10 est porté par une platine 42 tournant autour d'un axe 44 sous l'action d'un vérin 46 muni d'un codeur optique (non représenté). La focalisation approchée de l'objectif au niveau de la base du trait est obtenue initialement par un dispositif dit "auto-focus" de constitution connue utilisant par exemple un laser à 0,78 μm. Le vérin 46 est ensuite commandé d'abord pour amener, puis pour maintenir à une valeur constante le signal d'erreur (S1 - S2)/ S1 + S2 lors du balayage selon la direction x. On peut ainsi faire des mesures dans une gamme de hauteur plus étendue que la zone de linéarité (puisque limitée par la course du vérin uniquement). Le profil mesuré est très proche du profil géométrique réel car la pente de la partie linéaire est très forte, la plage de variation de - 1 à + 1 de R ne dépassant pas 0,4 μm dans un dispositif représentatif.

## Revendications

1. Procédé de mesure optique de largeur de traits en relief ou en creux sur un support, caractérisé en ce qu'on balaie la surface du support orthogonalement au trait à l'aide d'un système optique confocal à source d'éclairement monomode transverse (28), on mesure les variations du signal de sortie d'un détecteur différentiel (33) associé à un couteau (32) conjugué du foyer du système optique sur le support et orienté orthogonalement au trait, et on en déduit le profil à la base des flancs du trait dans une zone de linéarité de la mesure.

2. Dispositif de mesure de largeur de traits en relief ou en creux sur un support, comprenant un montage optique confocal à source de lumière monomode fournissant un front d'onde plan, un déflecteur optique (18,20) de balayage transversal au trait, un séparateur (26) des faisceaux incident dirigé vers le support (12) du trait (13) et réfléchi par ce support, et un détecteur, caractérisé en ce que le détecteur comporte un couteau dont l'arête (32) est placée à l'emplacement conjugué du foyer de l'objectif du montage optique et transversalement au trait dont la largeur est à mesurer, et un capteur différentiel (33) placé à l'emplacement conjugué de la pupille et sensible à la différence d'éclairement de part et d'autre du couteau.

3. Dispositif selon la revendication 2, caractérisé en ce que le capteur est associé à des moyens de mesure de largeur du trait à sa base par détection de la distance entre les points de balayage où l'écart du signal différentiel fourni par le détecteur (33) est égal à une valeur de référence.

4. Dispositif selon la revendication 3, caractérisé en ce que ledit signal est égal à la différence d'éclairement normalisée par la somme des éclairements.

5. Dispositif selon la revendication 4, caractérisé en ce que le capteur comporte un organe sensible (26) à deux quadrants fournissant deux signaux d'éclairement à des convertisseurs analogique/numérique (34) reliés à des moyens de mémorisation (36) et à des moyens de calcul (38).

6. Dispositif selon la revendication 2, caractérisé en ce que l'objectif (10) du montage optique confocal est porté par des moyens de déplacement provoquant le suivi de profil et muni de moyens de mesure de la position de l'objectif.

## Patentansprüche

1. Verfahren zum optischen Messen der Breite von auf einem Träger ausgebildeten reliefartigen oder vertieften Spuren, dadurch **gekennzeichnet**, daß man die Oberfläche des Trägers rechtwinklig zur Spur mit Hilfe eines optischen konfokalen Systems mit einer Monomodus-Transversal-Beleuchtungsquelle (28) abtastet, daß man die Änderungen des Ausgangssignals eines Differentialdetektors (33) mißt, welcher mit einer dem Brennpunkt des optischen Systems auf dem Träger zugeordneten (konjugierten) Schlierenblende (32) (Schneide) gekoppelt und rechtwinklig zur Spur ausgerichtet ist, und daß man davon das Profil am Fuß der Flanken dieser Spur in einer Linearitätszone der Messung ableitet.

2. Einrichtung zum Messen der Breite von auf einem Träger ausgebildeten reliefartigen oder vertieften Spuren, umfassend eine optische, konfokale Anordnung mit einer Monomodus-Lichtquelle, wobei das Licht eine ebene Wellenfront bildet, ferner einen optischen Deflektor (18, 20) für eine Abtastung quer zur Spur, einen Teiler (26) für die auf den Träger (12) der Spur (13) gerichteten und von diesem Träger reflektierten Einfallsstrahlen, und einen Detektor, dadurch **gekennzeichnet**, daß der Detektor eine Schlierenblende (Schneide) umfaßt, deren Kante (32) an der dem Brennpunkt des Objektives der optischen Anordnung zugeordneten (konjugierten) Stelle und quer zu der Spur, deren Breite zu messen ist, angeordnet ist, sowie ferner einen Differentialmeßaufnehmer (33), welcher an der der Pupille zugeordneten (konjugierten) Stelle plaziert ist und auf die Helligkeitsdifferenz der beiden Seiten der Schlierenblende anspricht.

3. Einrichtung nach Anspruch 2, dadurch **gekennzeichnet**, daß der Meßaufnehmer mit einer Einrichtung gekoppelt ist, welche die Breite der Spur an deren Fuß durch Ermitteln der Distanz zwischen den Abtastpunkten mißt, wo die Abweichung des vom Detektor (33) gelierten Differentialsignals einem Referenzwert gleich ist.

4. Einrichtung nach Anspruch 3, dadurch **gekennzeichnet,** daß dieses Signal dem Helligkeitsunterschied, normiert durch die Summe der Helligkeiten, gleich ist.

5. Einrichtung nach Anspruch 4, dadurch **gekennzeichnet,** daß der Meßaufnehmer ein Ansprechorgan (26) mit zwei Quadranten umfaßt, welches zwei Helligkeitssignale an analog-numerische Wandler (36) liefert, die mit einer Speichereinrichtung (36) und einer Rechnereinrichtung (38) verbunden sind.

6. Einrichtung nach Anspruch 2, dadurch **gekennzeichnet,** daß das Objektiv (10) der optischen konfokalen Anordnung von einer Verstelleinrichtung gehalten wird, die eine Profilnachführung bewirkt und mit Mitteln zum Messen der Objektivposition versehen ist.

**Claims**

1. A method for optical measurement of the width of lines projecting out of or recessed on a support, characterized in that the surface of a medium is scanned orthogonally to the line with a confocal optical system having a monomode transverse light source (28), the variations of the output signal of a differential detector (33) associated with a blade (32) conjugated with the focal point of the optical system on the support and angularly located orthogonally to the line are measured, and the profile at the basis of the sides of the line is derived therefrom in a linearity zone of the measurement.

2. Device for measuring the width of lines projecting out of or recessed in a support, comprising a confocal optical assembly having a monomode light source delivering a planar wave front, a scanning optical deflector (18,20) for scanning said surface transversely to the line, a separator (26) between the incident beam directed toward the support (20) of the line (13) and the beam reflected by the support, and a detector, characterized in that the detector comprises a blade whose edge (32) is located at the position conjugate with the focal point of the objective lens of the optical assembly and orthogonal to the line whose width is to be measured, and a differential sensor (33) placed at the position conjugate with the pupil and responsive to the difference of lighting on each side of the blade.

3. Device according to claim 2, characterized in that the sensor is associated with means for measuring the width of the line at the basis thereof by detecting the distance between the scanning points where the difference of the differential signal delivered by the sensor (32) is equal to a reference value.

4. Device according to claim 3, characterized in that said signal is equal to the difference between the amounts of lignt standardized by the sum of the amounts of lighting.

5. Device according to claim 4, characterized in that the sensor has a two-quadrants sensitive element (36) delivering two lighting signals to analog/digital converters (34) connected to storing means (36) and computing means (38).

6. Device according to claim 2, characterized in that the objective lens (10) of the confocal optical assembly is carried by displacing means causing the profile to be followed and provided with means for measuring the position of the objective lens.

FIG.1.

FIG.2.

FIG.3.

FIG.4.

FIG.5.

FIG.6.